# EUROPEAN PATENT SPECIFICATION

(11) **EP 4 381 194 B1**
(45) Date of publication and mention of the grant of the patent: **19.11.2025**
(21) Application number: 21755436.9
(22) Date of filing: 03.08.2021
(51) Int. Cl.: F01P 11/02, F04D 9/00, F04D 13/14

(54) **AUTOMOTIVE COOLANT LIQUID DEAERATOR UNIT**
ENTLÜFTUNGSEINHEIT FÜR KÜHLFLÜSSIGKEIT EINES KRAFTFAHRZEUGES
UNITÉ DÉSAÉRATEUR DE LIQUIDE DE REFROIDISSEMENT D'AUTOMOBILE

(43) Date of publication of application: 12.06.2024
(73) Proprietor: Pierburg Pump Technology GmbH, 41460 Neuss (DE)
(72) Inventor: FIORINI, Stefano, Fountain Inn, South Carolina 29644 (US); PERONI, Giorgio, 57123 Livorno (IT); WOLTZ, Brandon, Fountain Inn, South Carolina 29644 (US); TROMBLEY, Eric, Fountain Inn, South Carolina 29644 (US); FORD, Gabriella, Fountain Inn, South Carolina 29644 (US)
(74) Representative: terpatent PartGmbB
(86) International application number: PCT/EP2021/071663
(87) International publication number: WO 2023/011706

(56) References cited:
- DE-A1- 3 813 654
- US-A1- 2019 170 053
- US-A1- 2020 009 939

## Description

The invention refers to a passive automobile coolant liquid deaerator unit for deaerating a circulating coolant liquid of a coolant circuit of an automobile.

Typical coolant liquid circuits in automotive applications are engine coolant circuits for an electrical traction engine or for an internal combustion traction engine, or can be traction battery coolant circuits or coolant circuits for secondary devices, for example for turbochargers, for exhaust gas valves etc. An automotive coolant liquid circuit typically comprises a mechanical or an electric coolant liquid pump circulating the coolant liquid in the coolant circuit. The typical coolant liquid pump type is a flow pump.

The cooling capacity of the coolant liquid and the pumping rate of a flow pump are substantially deteriorated by gas/air bubbles carried with the coolant liquid current. In the state-of-the-art, an expansion tank is provided at the vertically highest point of the coolant circuit so that the air bubbles can rise up to the expansion tank. However, when the coolant liquid pump is active and the coolant liquid is circulated in the coolant circuit, the air bubbles are carried with the circulating coolant liquid current so that the air bubbles could substantially remain within the circulating coolant liquid current and do not rise to the expansion tank. This effect is even stronger and worse the higher the flow velocity of the coolant liquid in the coolant liquid circuit is.

DE 10 2010 008 656 A1 discloses an air bubble separator being provided in-line with a usual coolant liquid tube of the circuit. The air separation means cause turbulences in the relatively fast-flowing coolant liquid current so that the air bubble separator is not very effective.

US 2020/0009939 A1 discloses a coolant liquid deaerator unit with two identical deaeration chambers being defined by a completely curved housing.

DE 38 13 654 A1 discloses a coolant liquid deaerator unit with a vertical general flow concept.

US 2019/0170053 A1 discloses a coolant liquid deaerator unit with two quasi-spherical deaeration chambers.

It is an object of the invention to provide an effective passive automotive coolant liquid deaerator means.

This object is achieved with a passive automotive coolant liquid deaerator unit with the features of claim 1.

The passive automotive coolant liquid deaerator unit according to the invention is provided with a deaerator housing defining a widening deceleration chamber with a chamber liquid inlet and a chamber liquid outlet. The deaerator housing is provided with a deaeration opening at the vertical top of the deceleration chamber. The fluidic cross-section of the deceleration chamber is continuously increasing at least in a zone between the chamber liquid inlet and the chamber liquid outlet so that the flow velocity of the coolant liquid current within the deceleration chamber is continuously and substantially reduced.

The deaeration opening can be fluidically connected to the atmosphere or to an expansion tank. A semipermeable membrane can be provided between the deaeration opening and the atmosphere or the expansion tank, the semipermeable membrane being not permeable for the coolant liquid but permeable for air.

The coolant liquid flow velocity reduction has the effect that the pressure of the coolant liquid and of the gas bubbles is reduced so that the gas bubbles expand and become lighter in specific weight so that the hydrostatic uplift force of the air bubbles is increased. Since the coolant liquid flow velocity is reduced significantly in the deceleration chamber a relatively short deceleration chamber, seen in flow direction, is sufficient to give the gas bubbles enough time to rise up to the surface of the coolant liquid within the deceleration chamber. Since the fluidic cross-section of the deceleration chamber is continuously increasing, and is not only stepwisely increasing, massive turbulences within the deceleration chamber are avoided so that the rise of the air bubbles to the coolant liquid surface is not disturbed.

At least 50% of the total cross-sectional increase between the chamber liquid inlet and the chamber liquid outlet is provided by the continuously cross-sectional increasing section of the deceleration chamber. It is not necessary to avoid any kind of a stepwise cross-sectional increase but the non-continuous share should be as small as possible, preferably below 25% of the total cross-sectional increase between the inlet and the outlet.

The coolant liquid deaerator unit with the, at least in part, continuously cross-sectional increasing deceleration chamber provides a very effective degassing or deaeration of the coolant liquid current with separation rates of substantially more than 35%, and even higher, over the complete spectrum of possible general coolant flow rates in the coolant liquid circuit.

Generally, the invention as defined in claim 1 can also be used in non-automotive applications, for example, in a static electronics cooling circuit.

The deceleration chamber has a cross-section widening zone with a continuous increase of the horizontal width from an initial horizontal width to an end width, which increase preferably is a linear increase.

The bottom wall between the chamber liquid inlet and the chamber liquid outlet of the deceleration chamber is lying substantially in a horizontal plane. Since the deceleration chamber bottom wall is, seen in flow direction, not substantially declining, the liquid current flow within the deceleration chamber has no substantial downward component which could cause the gas bubbles to have a downward flow direction component as well which would hinder the gas bubbles to rise to the coolant liquid surface.

The continuous increase share is more than 50% of the total cross-sectional increase of the complete deceleration chamber, and is realized by an increasing horizontal width of the deceleration chamber, but not by a declining bottom wall of the deceleration chamber.

Preferably, the cross section widening zone begins right after the chamber liquid inlet, whereas a constant cross-section zone could be provided downstream of the cross-section widening zone. Since the cross-section widening zone could cause some liquid turbulences, the coolant liquid current is calmed after the cross-section widening zone so that the rise of the gas bubbles is improved substantially.

Preferably, the chamber liquid inlet is provided vertically higher than the chamber liquid outlet. More preferably, the lowest edge of the opening of the chamber liquid inlet is vertically higher than the highest edge of the opening of the chamber liquid outlet. The vertical chamber wall above the chamber liquid outlet opening is a kind of a baffle plate for the gas bubbles so that the gas bubbles hitting the vertical chamber wall simply rise vertically along the vertical chamber opening wall up to the liquid surface.

Preferably, the coolant liquid deaerator unit is a twin deaerator and the deaerator housing defines a widened second deceleration chamber. The second widened deceleration chamber is substantially separated from the first deceleration chamber so that the two different coolant liquid flows flowing through the two deceleration chambers are substantially separated from each other and do not substantially mix with each other. The deaerator housing according to this aspect of the invention therefore integrates two deaerator units for two separate cooling liquid circuits.

Preferably, the deaerator housing is provided with a separation wall directly separating the first deceleration chamber from the second deceleration chamber. However, the separation wall does not necessarily completely fluidically separate the two deceleration chambers but separates the lower liquid-containing parts of both deceleration chambers from each other so that the liquids of both cooling liquid circuits are not mixed.

Preferably the deaerator unit is provided with a single gas outlet opening for both deceleration chambers so that the twin deaerator has only one single gas outlet opening.

Preferably, the housing main body of the deaerator housing defines an axial liquid pump inlet opening axially aligned with the center of a flow pump wheel of a mechanical or an electrical coolant liquid pump. The axial liquid pump inlet opening is axially adjacent to the flow pump wheel. Even more preferably, the flow pump wheel is an impeller wheel and the deaerator housing main body defines an outlet ring channel, preferably a volute-like ring channel, radially surrounding the flow pump wheel. The deaerator housing main body is preferably a plastic body defining in one integral piece at least four or five side walls of the deceleration chamber and also substantially defining the pumps outlet ring channel so that a separate (plastic) piece for defining the outlet ring channel can be avoided.

Preferably, the largest cross-section within the deceleration chamber seen in the general flow direction is at least 80% larger, more preferably more than 120% larger, than the cross section of the liquid inlet opening.

Preferably, the deaerator housing defining the deceleration chamber, the deaerator liquid inlet opening and the deaerator liquid outlet opening, is mechanically directly and stiffly connected to the liquid pump unit, and in particular is directly connected to a housing part of the liquid pump unit.

In other words, the flow pump unit and the passive deaerator unit are combined in one single integrated deaerator-pump-module. The fluidic properties of the flow pump unit and of the deaerator unit can be perfectly harmonized because the pump unit and the deaerator unit are fluidically directly connected to each other. Compared to a deaerator unit provided separately and remote from the pump unit, a separate connection tube and connection means to connect the two units are avoided so that the number of fluidic interfaces of the coolant liquid circuit is reduced.

Preferably, the deaerator unit is positioned fluidically upstream of the electric flow pump unit so that a relatively air-bubble-free coolant liquid current enters the flow pump unit so that the fluidic efficiency of the flow pump unit is not deteriorated and the flow pump unit always works efficiently.

One embodiment of the invention is described with reference to the enclosed drawings, wherein
figure 1 shows a combined top view and a horizontal longitudinal section I-I of an integrated automotive electric liquid pump module comprising a twin coolant liquid deaerator unit according to the invention, and
figure 2 shows a combined side of view and a vertical longitudinal section II-II of the pump module including the twin coolant liquid deaerator of figure 1.

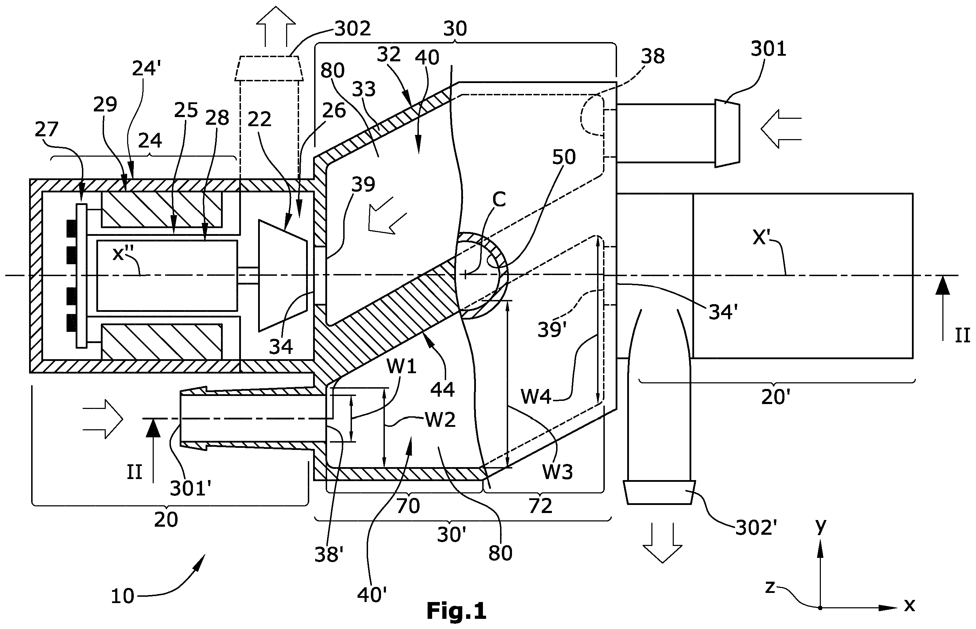

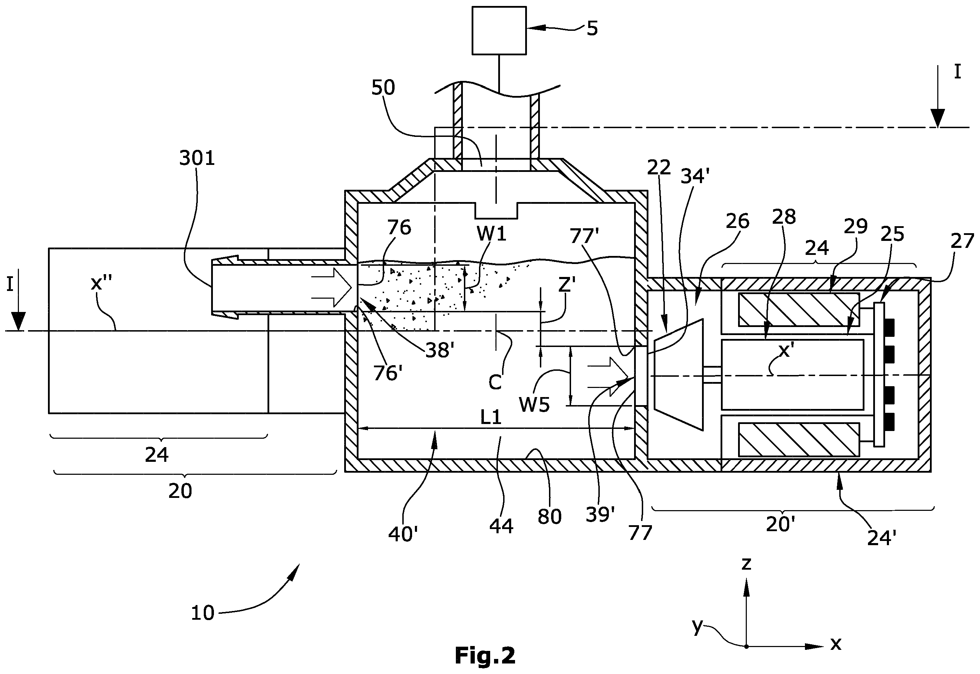

Figures 1 and 2 show an automotive electric liquid pump module 10 integrating two combined deaerator/pump combinations. The pump module 10 is used in an automotive application which means that low weight, very low production costs, high reliability, high vibration durability and compactness are general requirements for the pump module 10. The pump module 10 is a twin module integrating two combined flow pump unit/deaerator unit combinations in one single pump module 10. The pump module 10 can circulate a coolant liquid in two different coolant circuits, for example an automotive traction engine cooling circuit and a traction battery cooling circuit.

Figure 1 shows a top view of two different horizontal planes XY and figure 2 shows a side view of different vertical planes XZ of the pump module 10. The pump module 10 comprises a first electrical flow pump unit 20, a fluidically related first passive deaerator unit 30, a second electrical flow pump unit 20' and a fluidically related second passive deaerator unit 30'. From a structural point of view, the first deaerator unit 30 and the second deaerator unit 30' are defined by one single plastic deaerator housing 32 made of a suitable plastic deaerator housing main body 33 and a suitable cover body, so that the pump module 10 is substantially an assembly of two separate electrical flow pump units 20, 20' and the complete deaerator housing 32.

The two separate electrical flow pump units 20, 20' both have an identical structure, but alternatively can generally be different in their electric and hydraulic performance. In this embodiment, the electrical flow pump units 20, 20' both are provided with an electric can motor 24 with a separation can 25 separating a wet motor section from a dry motor section. The motor electronics 27 and an electromagnetic motor stator 29 are provided in the dry section, whereas a permanently magnetized motor rotor 28 and a flow pump wheel 22 are provided in the wet section. The motor rotor 28 directly and coaxially drives the flow pump rotor 22 which is provided as an impeller with an axial pump wheel inlet and a radial pump wheel outlet.

The deaerator housing 32 defines a first widened deceleration chamber 40 and a second identical deceleration chamber 40'. However, the two deceleration chambers 40, 40' do not necessarily need to be identical if the two connected cooling circuits and their cooling performance are not equal.

The cross section area of the deceleration chambers 40, 40' is dramatically widening after the corresponding chamber liquid inlet 38, 38' by more than 200% in relation to the cross section area of the opening of the corresponding chamber liquid inlet 38, 38' so that the liquid entering the deceleration chamber 40, 40' is dramatically decelerated and flows relatively slowly from the chamber liquid inlet 38, 38' to the corresponding chamber liquid outlet 39, 39'.

As shown in figure 1 the deceleration chamber 40, 40' has, right after the opening 76 of the chamber liquid inlet 38, 38', a cross section widening zone 70 with an initial horizontal width W2 which is linearly increasing to an end width W3. Downstream of and directly following to the cross-section widening zone 70 is a constant cross-section zone 72 with a constant horizontal width W3,W4. The opening 76 of the chamber liquid inlet 38, 38' has a chamber liquid opening width W1 which is a diameter and which is about 60% of the initial horizontal width W2. The horizontal end width is about 200% of the initial horizontal width W2.

As can be seen in figure 2, the bottom wall 80 of the deceleration chambers 40, 40' is completely plane and is lying in a horizontal plane XY. The chamber liquid inlet 38, 38' is located vertically higher than the corresponding chamber liquid outlet 39, 39'. The lowest edge 76' of the chamber liquid inlet opening 76 is provided vertically higher with a vertical offset Z' than the highest edge 77' of the chamber liquid outlet opening 77.

Therefore, the gas/air bubbles entering the deceleration chamber 40, 40' together with the coolant liquid have much time to rise to the top region of the deceleration chamber 40, 40', as shown in figure 2. The two deceleration chambers 40, 40' are substantially separated from each other by a separation wall 44 so that the coolant liquids of the two deceleration chambers and do not mix with each other.

Both deaerator units 30, 30' together have one single common deaeration opening 50 at the vertical top of the two deceleration chambers 40, 40' so that the deceleration chambers 40, 40' are fluidically connected with each other and have the same fluid pressures. Alternatively, each deaerator unit 30, 30' can have its own deaeration opening to fluidically completely separate both cooling circuits from each other. The deaeration opening 50 is fluidically connected to a compensation tank 5.

The since the deaerator unit 30, 30' is positioned fluidically upstream of the corresponding electric flow pump unit 20, 20', the deaerator unit chamber liquid outlet 39, 39' defines the axial liquid pump inlet opening 34, 34', respectively, so that a deaerated liquid current axially enters the corresponding pump unit 20, 20'. As can be seen in both figures, the deaerator housing main body 33 substantially defines the outer circumference wall of the outlet ring channel 26 radially surrounding the corresponding flow pump wheel 22, and also defines the corresponding tangential pump outlet duct with the corresponding pump outlet opening 302, 302'. Additionally, the deaerator housing main body 33 defines both inlet ducts 301, 301' respectively leading to the deaerator unit liquid inlets 38, 38'. The deaerator housing main body 33 is directly connected to the motor housing 24'.

As shown in both figures, the rotational axis' X", X' of both flow pump units 20, 20' are provided perfectly coaxially with each other. Additionally, the rotational axis' X", X' of both flow pump units 20, 20' perfectly intersect with the center of gravity C of the complete liquid pump module 10.

## Claims

1. A passive automotive coolant liquid deaerator unit (30, 30') for deaerating a circulating coolant liquid of a coolant circuit of an automobile, with
a deaerator housing (32) defining a deceleration chamber (40, 40') with a chamber liquid inlet (38, 38') and a chamber liquid outlet (39, 39') and being provided with a deaeration opening (50) at the vertical top of the deceleration chamber (40, 40'),
whereas the fluidic cross section of the deceleration chamber (40, 40') is continuously increasing between the chamber liquid inlet (38, 38') and the chamber liquid outlet (39, 39') at least in a cross-section widening zone (70) with a continuous increase of the horizontal width from an initial width (W2) to an end width (W3),
**characterised in that**
the bottom wall (80) between the chamber liquid inlet (38, 38') and the chamber liquid outlet (39, 39') of the deceleration chamber (40, 40') is lying substantially in a horizontal plane (XY).

2. The passive automotive coolant liquid deaerator unit (30, 30') of claim 1, wherein the cross-section widening zone (70) begins right after the chamber liquid inlet (38, 38').

3. The passive automotive coolant liquid deaerator unit (30, 30') of one of the preceding claims, wherein the chamber liquid inlet (38, 38') is provided vertically higher than the chamber liquid outlet (39, 39'), and preferably the lowest edge (76') of the opening (76) of the chamber liquid inlet (38, 38') is vertically higher than the highest edge (77') of the opening (77) of the chamber liquid outlet (38, 38').

4. The passive automotive coolant liquid deaerator unit (30, 30') of one of the preceding claims, wherein the deaerator housing (32) defines a widened second deceleration chamber (40') being substantially separated from the first deceleration chamber (40).

5. The passive automotive coolant liquid deaerator unit (30, 30') of claim 4, wherein the deaerator housing (32) is provided with a separation wall (44) directly separating the first deceleration chamber (40) from the second deceleration chamber (40').

6. The passive automotive coolant liquid deaerator unit (30, 30') of claim 4 or 5, wherein the deaerator unit (30) is provided with one single gas outlet opening (50) for both deceleration chambers (40, 40').

7. The passive automotive coolant liquid deaerator unit (30, 30') of one of the preceding claims, whereas the deaerator housing body (33) of the deaerator housing (32) defines an outlet ring channel (26) for a flow pump wheel (22) of an electrical flow pump unit (20) adjacently mountable to the deaerator unit (30).

## Patentansprüche

1. Eine passive Kraftfahrzeug-Kühlflüssigkeits-Entlüftungseinheit (30, 30') zum Entlüften einer zirkulierenden Kühlflüssigkeit eines Kühlmittel-Kreislaufs eines Kraftfahrzeugs, mit
einem Entlüftungsgehäuse (32), das eine Verzögerungskammer (40, 40') mit einem Kammerflüssigkeits-Einlass (38, 38') und einem Kammerflüssigkeits-Auslass (39, 39') definiert und mit einer Entlüftungsöffnung (50) an der vertikalen Oberseite der Verzögerungskammer (40, 40') versehen ist,
wobei der Strömungsquerschnitt der Verzögerungskammer (40, 40') zwischen dem Kammerflüssigkeits-Einlass (38, 38') und dem Kammerflüssigkeits-Auslass (39, 39') zumindest in einer Querschnittserweiterungszone (70) mit einer kontinuierlichen Zunahme der horizontalen Breite von einer Anfangsbreite (W2) zu einer Endbreite (W3) kontinuierlich zunimmt,
**dadurch gekennzeichnet, dass**
die Bodenwand (80) zwischen dem Kammerflüssigkeits-Einlass (38, 38') und dem Kammerflüssigkeits-Auslass (39, 39') der Verzögerungskammer (40, 40') im Wesentlichen in einer horizontalen Ebene (XY) liegt.

2. Die passive Kraftfahrzeug-Kühlflüssigkeits-Entlüftungseinheit (30, 30') nach Anspruch 1, wobei die Querschnittserweiterungszone (70) unmittelbar nach dem Kammerflüssigkeits-Einlass (38, 38') beginnt.

3. Die passive Kraftfahrzeug-Kühlflüssigkeits-Entlüftungseinheit (30, 30') nach einem der vorhergehenden Ansprüche, wobei der Kammerflüssigkeits-Einlass (38, 38') vertikal höher als der Kammerflüssigkeits-Auslass (39, 39') vorgesehen ist, und vorzugsweise die unterste Kante (76') der Öffnung (76) des Kammerflüssigkeits-Einlasses (38, 38') vertikal höher als die höchste Kante (77') der Öffnung (77) des Kammerflüssigkeits-Auslasses (38, 38') ist.

4. Die passive Kraftfahrzeug-Kühlflüssigkeits-Entlüftungseinheit (30, 30') nach einem der vorhergehenden Ansprüche, wobei das Entlüftungsgehäuse (32) eine erweiterte zweite Verzögerungskammer (40') definiert, die im Wesentlichen von der ersten Verzögerungskammer (40) getrennt ist.

5. Die passive Kraftfahrzeug-Kühlflüssigkeits-Entlüftungseinheit (30, 30') nach Anspruch 4, wobei das Entlüftungsgehäuse (32) mit einer Trennwand (44) versehen ist, die die erste Verzögerungskammer (40) direkt von der zweiten Verzögerungskammer (40') trennt.

6. Die passive Kraftfahrzeug-Kühlflüssigkeits-Entlüftungseinheit (30, 30') nach Anspruch 4 oder 5, wobei die Entlüftungseinheit (30) mit einer einzigen Gasauslassöffnung (50) für beide Verzögerungskammern (40, 40') versehen ist.

7. Die passive Kraftfahrzeug-Kühlflüssigkeits-Entlüftungseinheit (30, 30') nach einem der vorhergehenden Ansprüche, wobei der Entlüftungsgehäusekörper (33) des Entlüftungsgehäuses (32) einen Auslassringkanal (26) für ein Strömungspumpenrad (22) einer elektrischen Strömungspumpeneinheit (20) definiert, die angrenzend an die Entlüftungseinheit (30) montierbar ist.

## Revendications

1. Une unité passive de désaération de liquide de refroidissement d'automobile (30, 30') pour désaérer un liquide de refroidissement en circulation d'un circuit de refroidissement d'une automobile, avec
un boîtier de désaération (32) définissant une chambre de décélération (40, 40') avec une entrée de liquide de chambre (38, 38') et une sortie de liquide de chambre (39, 39') et étant pourvu d'une ouverture de désaération (50) au sommet vertical de la chambre de décélération (40, 40'),
tandis que la section transversale fluidique de la chambre de décélération (40, 40') augmente en continu entre l'entrée de liquide de chambre (38, 38') et la sortie de liquide de chambre (39, 39') au moins dans une zone d'élargissement de section transversale (70) avec une augmentation continue de la largeur horizontale d'une largeur initiale (W2) à une largeur finale (W3),
**caractérisée en ce que**
la paroi inférieure (80) entre l'entrée de liquide de chambre (38, 38') et la sortie de liquide de chambre (39, 39') de la chambre de décélération (40, 40') est située considérablement dans un plan horizontal (XY).

2. L'unité passive de désaération de liquide de refroidissement d'automobile (30, 30') selon la revendication 1, dans laquelle la zone d'élargissement de section transversale (70) commence juste après l'entrée de liquide de chambre (38, 38').

3. L'unité passive de désaération de liquide de refroidissement d'automobile (30, 30') selon l'une des revendications précédentes, dans laquelle l'entrée de liquide de chambre (38, 38') est prévue verticalement plus haut que la sortie de liquide de chambre (39, 39'), et préférablement le bord le plus bas (76') de l'ouverture (76) de l'entrée de liquide de chambre (38, 38') est verticalement plus haut que le bord le plus haut (77') de l'ouverture (77) de la sortie de liquide de chambre (38, 38').

4. L'unité passive de désaération de liquide de refroidissement d'automobile (30, 30') selon l'une des revendications précédentes, dans laquelle le boîtier de désaération (32) définit une deuxième chambre de décélération élargie (40') qui est sensiblement séparée de la première chambre de décélération (40).

5. L'unité passive de désaération de liquide de refroidissement d'automobile (30, 30') selon la revendication 4, dans laquelle le boîtier de désaération (32) est pourvu d'une paroi de séparation (44) séparant directement la première chambre de décélération (40) de la deuxième chambre de décélération (40').

6. L'unité passive de désaération de liquide de refroidissement d'automobile (30, 30') selon la revendication 4 ou 5, dans laquelle l'unité de désaération (30) est pourvue d'une ouverture de sortie de gaz unique (50) pour les deux chambres de décélération (40, 40').

7. L'unité passive de désaération de liquide de refroidissement d'automobile (30, 30') selon l'une des revendications précédentes, tandis que le corps de boîtier de désaération (33) du boîtier de désaération (32) définit un canal annulaire de sortie (26) pour une roue de pompe à flux (22) d'une unité de pompe électrique à flux (20) pouvant être montée de manière adjacente à l'unité de désaération (30).
